# EUROPEAN PATENT SPECIFICATION

(11) **EP 2 400 709 B1**
(45) Date of publication and mention of the grant of the patent: **20.02.2019**
(21) Application number: 10195126.7
(22) Date of filing: 15.12.2010
(51) Int. Cl.: H04L 29/06

(54) **ANTI-HACKING SYSTEM THROUGH TELEPHONE AUTHENTICATION**
HACKERSICHERES SYSTEM DURCH TELEFONAUTHENTIFIZIERUNG
SYSTÈME ANTI-PIRATAGE PAR AUTHENTIFICATION TÉLÉPHONIQUE

(30) Priority: 25.06.2010 KR 20100060712
(43) Date of publication of application: 28.12.2011
(73) Proprietor: Think Authorization Technology, Jeju-do (KR)
(72) Inventor: Yeoul, Kim Gwi, Oryu-dong, Guro-gu, Seoul (KR)
(74) Representative: Stolmár & Partner Patentanwälte PartG mbB

(56) References cited:
- US-A1- 2008 141 353

## Description

### BACKGROUND OF THE INVENTION

### Field of the Invention

The present invention relates to an anti-hacking system through telephone authentication and, more particularly, to an anti-hacking system through telephone authentication, in which authentication is performed over a communication network in order to guarantee safer integrity authentication in implementing an authentication system configured to issue various documents to only authenticated users or to be accessible to only the authenticated users through electronic financial transactions, such as Internet banking, or verification.

### Background of the Related Art

With the recent rapid development of the Internet, a variety of Internet accidents are sharply increasing. There is an urgent need for security measures for preventing the Internet accidents.

Authentication service using security cards or certificates is chiefly used as the security measures. However, there is always a danger of accidents because Internet accidents through various hacking means are not fully prevented even through such authentication service.

Internet accidents using voice phishing are sharply increasing.

The term 'voice phishing' is a compound word of 'voice' , 'private data', and 'fishing', and it refers to a new type of a scam scheme which poses as a specific person using a telephone. Voice phishing typically uses the activity of defrauding an account holder to transfer money at the ATM by posing as a public institution. There is a need for strong measures because recent voice phishing is grafted onto various Internet transactions to increase damage.
An authentication system according to the prior art is known from document US 2008/141353 A1.

### SUMMARY OF THE INVENTION

Accordingly, the present invention has been made in view of the above problems occurring in the prior art, and it is an object of the present invention to provide an anti-hacking system through telephone authentication, which is capable of increasing security and also eliminating a danger of additional accidents due to voice phishing, through telephone authentication in case where principal authentication is required, such as in electronic financial transactions.

The invention comprises an anti-hacking system through telephone authentication according to independent claim 1.

Accordingly, the user performing the telephone authentication can clearly check the effectiveness of authentication through the communication terminal.

### BRIEF DESCRIPTION OF THE DRAWINGS

Further objects and advantages of the invention can be more fully understood from the following detailed description taken in conjunction with the accompanying drawings in which:
FIG. 1 is a diagram showing the general configuration of an anti-hacking system through telephone authentication according to the present invention;
FIG. 2 is a diagram illustrating a first embodiment of the anti-hacking system through telephone authentication according to the present invention; and
FIG. 3 is a diagram illustrating a second embodiment of the anti-hacking system through telephone authentication according to the present invention.

### <Description of reference numerals of principal elements in the drawings>

100: access terminal 200: main server
210: authentication unit 220: processing unit
230: telephone authentication unit
300: communication terminal

### DETAILED DESCRIPTION OF EMBODIMENTS

Some exemplary embodiments of the present invention are now described in detail with reference to the accompanying drawings.

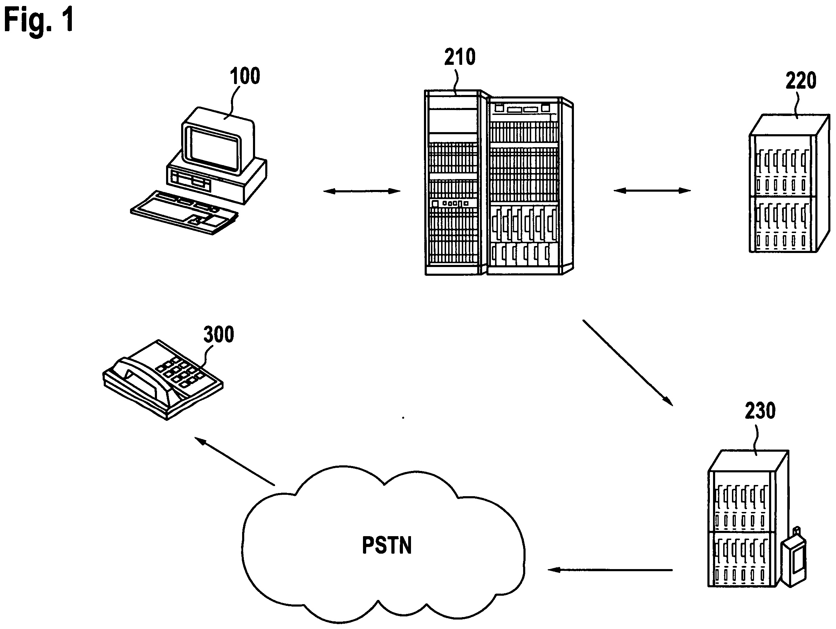

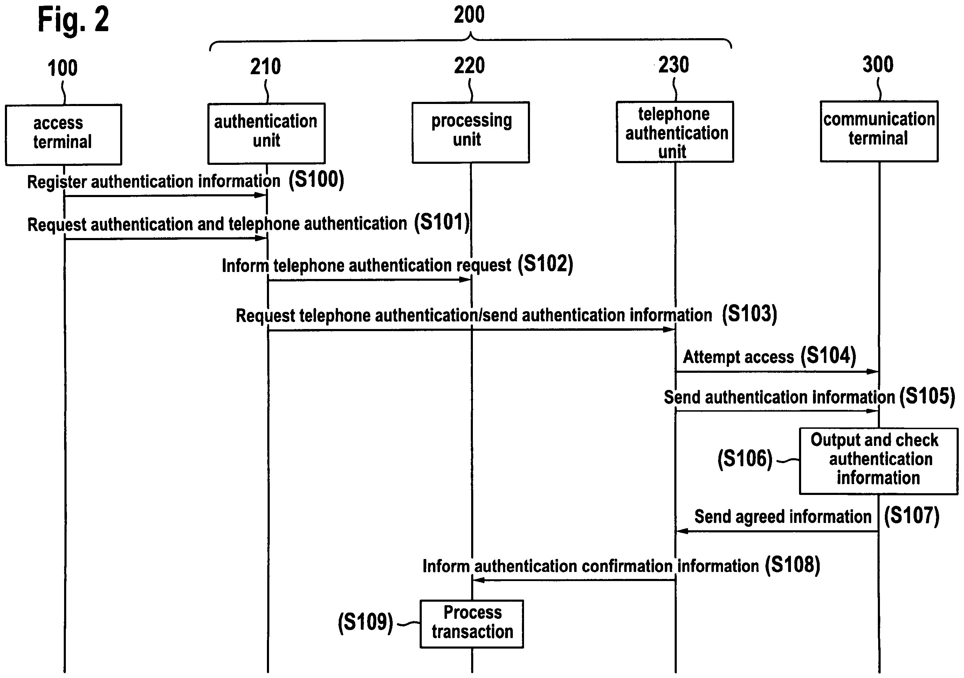

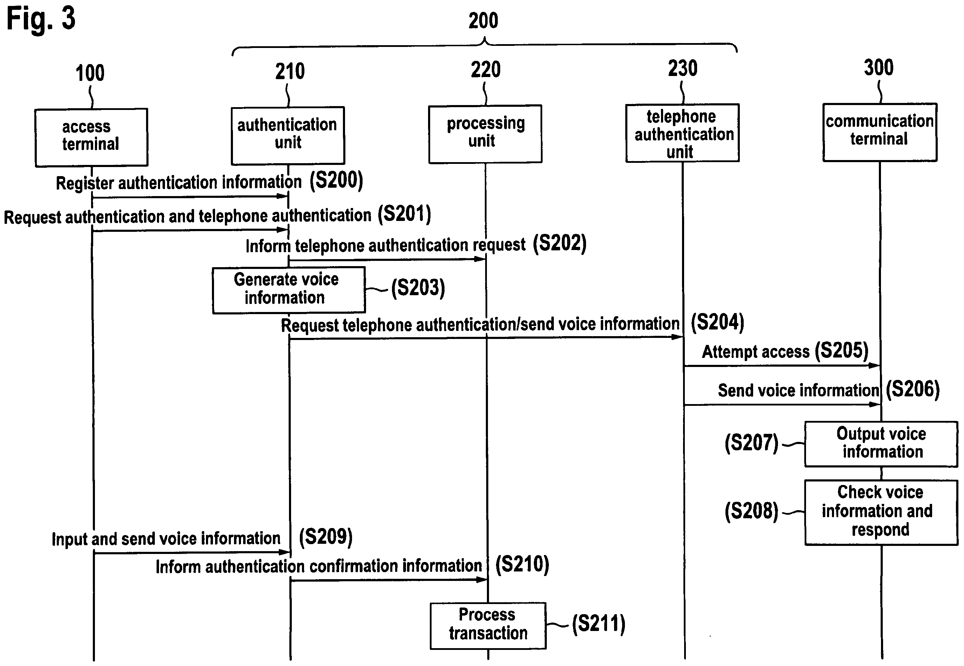

FIG. 1 is a diagram showing the general configuration of an anti-hacking system through telephone authentication according to the present invention, FIG. 2 is a diagram illustrating a first embodiment of the anti-hacking system through telephone authentication according to the present invention, and FIG. 3 is a diagram illustrating a second embodiment of the anti-hacking system through telephone authentication according to the present invention.

As shown in FIG. 1, the anti-hacking system through telephone authentication includes an access terminal 100, a main server 200, and a communication terminal 300.

In the system including the above elements, the access terminal 100 is a user terminal that can access the Internet and it may be a PC, a notebook computer, a PDA, or IPTV. The access terminal 100 functions to access a website desired by a user through the Internet and input information for authenticating the user.

The communication terminal 300 can perform communication over a Mobile Wireless Communication Network (MWCN) or a Public Switched Telephone Network (PSTN). The communication terminal 300 is separately owned by a user who requests anti-hacking according to the present invention, and it makes a voice call and has a unique communication number.

The main server 200 accesses the communication terminal 300, performs telephone authentication by checking the authenticity of a user in such a way as to receive agreed information from the user, and then performs authentication for the user. The main server 200 includes an authentication unit 210, a processing unit 220, and a telephone authentication unit 230. The authentication unit 210 performs authentication for the user authentication requested by the access terminal 100. The processing unit 220 is connected to the authentication unit 210 and configured to process the user authentication requested by the access terminal 100. The telephone authentication unit 230 is configured to perform Computer and Telephony Integration (CTI) authentication and ARS authentication over a telephone network. The telephone authentication unit 230 accesses the communication terminal 300, corresponding to user information of the access terminal 100 for which the user authentication has been requested and receives approval for the user authentication.

According to the anti-hacking system, a process of, when a user attempts his authentication through the access terminal 100, making a telephone call through the communication terminal 300 and checking that the user is true in such a way as to receive agreed information from the user is performed. Accordingly, Internet accidents can be prevented.

In addition, according to the present invention, a user who performs telephone authentication can clearly recognize the authenticity of a telephone call itself for the telephone authentication. This is described in detail below.

This can occur in conditions, such as company Internet banking, in which the person in charge who attempts Internet banking and a settlement entity that finally approves the Internet banking are separated. This method is useful because the settlement entity performing telephone authentication may not know whether the authentication process is performed.

As shown in FIG. 2, first, the access terminal 100 connected to the Internet accesses the main server 200 that will perform authentication for the access terminal 100 through the Internet and selectively designates authentication information necessary when telephone authentication for the authentication for the access terminal 100 is performed at step S100.

Regarding the authentication information, a user may directly select a number, designate specific sound and listen to the specific sound, or record his voice and designate the recorded voice.

In order to use service, the access terminal 100 connected to the Internet accesses the main server 200 of a service provider that will perform authentication, inputs basic information, such as an ID related to the authentication, and requests telephone authentication from the authentication unit 210 at step S101.

In response to the request, the authentication unit 210 of the main server 200 informs the processing unit 220 of the telephone authentication request at step S102 and requests the telephone authentication from the telephone authentication unit 230 at step S103.

Here, the authentication unit 210 of the main server 200 sends authentication information, inputted when a transaction was set up, to the telephone authentication unit 230.

In response to the telephone authentication request, the telephone authentication unit 230 attempts access to the communication terminal 300 using a telephone number corresponding to the access terminal 100 at step S104.

The telephone number corresponding to the access terminal 100 may be designated in various ways. For example, the telephone number may be previously designated when a user makes a contract with a service providing entity off-line. For another example, a user may directly designate a telephone number when requesting authentication.

Next, the telephone authentication unit 230 sends the authentication information, received from the authentication unit 210, to the communication terminal 300 at step S105.

The communication terminal 300 displays the received authentication information so that the user can check the authentication information. Accordingly, the user of the communication terminal 300 may check whether a received call corresponds to a telephone number registered when a transaction is first made on the basis of the authentication information before receiving the call or check sound authentication information, outputted through a speaker before receiving a call, on the basis of the authentication information at step S106.

The user who has received a call by checking the authentication information knows that telephone authentication is not for hacking, but for true telephone authentication and clearly check the effectiveness of telephone authentication.

After checking that the telephone authentication is valid, the user performs telephone authentication in such a way as to input agreed information through the communication terminal 100 in order to confirm the authenticity of the user at step S107.

Next, the telephone authentication unit 230 sends the authentication confirmation information to the processing unit 220 at step S108. Next, the processing unit 220 that has received the authentication confirmation information processes the authentication requested by the user and terminates the process at step S109.

Meanwhile, the authentication information provided to the communication terminal 300 owned by the user may be automatically set to a unique communication number (that is, a telephone number) of the access terminal 100. When a request for telephone authentication is received, the telephone authentication unit 230 sends the telephone number of the communication terminal 300 as an authentication number and the communication terminal 300 displays the telephone number. Accordingly, the user can check the authenticity of the requested telephone authentication.

In accordance with the present invention, when a third party having malicious purposes attempts telephone authentication through hacking or attempts false telephone authentication in order to obtain unique information from a user, the user can know that the false telephone authentication by checking errors in authentication information.

Meanwhile, according to the present invention, an authentication procedure having stronger security for improper telephone authentication attempts from a third party may be performed. The authentication procedure is described in detail by taking voice information from the authentication information as an example.

In the embodiment shown in FIG. 3, the access terminal 100 connected to the Internet inputs authentication information for subscription at step S200 and requests telephone authentication in order to use real service at step S201. The authentication unit 210 of the main server 200 informs the processing unit 220 of the request of the telephone authentication at step S202 and generates voice information for the telephone authentication procedure at step S203. Next, the authentication unit 210 requests the telephone authentication from the telephone authentication unit 230 and, at the same time, sends the generated voice information to the telephone authentication unit 230 at step S204. The telephone authentication unit 230 attempts access to the communication terminal 300 at step S205 and transmits the voice information to the communication terminal 300 at step S206. The communication terminal 300 outputs the voice information at step S207, and a user checks the outputted voice information at step S208 in order to check whether the telephone authentication is valid. This process is the same as that of FIG. 2.

Here, the owner of the communication terminal 300 checks the outputted voice information and sends the voice information to the authentication unit 210 of the main server 200 through the access terminal 100 in such a way as to press keys on the keyboard on a website or directly or to perform direct input using a microphone at step S209.

Next, the authentication unit 210 checks the received voice information and, if the voice information corresponds to a number generated when the telephone authentication was requested, informs the processing unit 220 of authentication confirmation information at step S210. The processing unit 220 that has received the authentication confirmation information processes the authentication requested by the user and terminates the process at step S211.

In case where, during the process, a malicious third party attempts his own authentication through improper telephone authentication using memory hacking, the main server informs the third party of false voice information. Accordingly, authentication can be performed more strongly because the corresponding telephone authentication can be determined to be false telephone authentication.

It is preferred that detailed contents (for example, the name of a website in which login is performed, a transaction history of Internet banking or the like) regarding authentication performed in the state in which a telephone call is made to a user during the telephone authentication process of the present invention be received from the main server and provided through voice or a screen so that the detailed contents can be checked before agreed information is received from a user.

This is for the purpose of preventing Internet accidents, such as a change of a debit account occurring because transaction contents first intended by a user are manipulated by memory hacking. There is an advantage in that a user who performs telephone authentication can clearly check whether the contents of authentication have been improperly changed before final telephone authentication.

As described above, according to the present invention, there is an advantage in that Internet accidents can be prevented by having a user check his authentication through telephone authentication, such as in electronic financial transactions. Furthermore, there is an advantage in that the denial of a transaction can be prevented and accidents can be prevented more perfectly because improper telephone authentication attempts using hacking can be checked by a user and the responsibilities and rights of a service provider and a user can be clearly distinguished.

Furthermore, according to the present invention, authentication information for checking an improper telephone authentication attempt is received from a user and then checked. Accordingly, there is an advantage in that a user can be prevented from being damaged by voice phishing.

Furthermore, according to the present invention, in a process of attempting telephone authentication, contents for user authentication are checked by the user. Accordingly, there is an advantage in that hacking can be prevented because a user can easily check an improper change of authentication contents due to hacking.

## Claims

1. An anti-hacking system through telephone authentication, comprising:
an access terminal (100) configured to be connected to the Internet and to access a site requiring user authentication;
a communication terminal (300) owned by a user of the access terminal (100);
a main server (200) configured to
access (S104) the communication terminal (300), check the authenticity of the user by performing (S107) telephone authentication, and
process (S108-S109) the user authentication, upon determining that the user has input agreed information through the access terminal (100),
wherein the communication terminal (300) is configured to
receive (S105) unique authentication information of the user, identifying validity of a caller, from the main server (200) and
provide the unique authentication information so that the unique authentication information can be checked by the user prior to inputting the agreed information in the access terminal (100),
whereby the user performing the telephone authentication can clearly check the effectiveness of authentication through the communication terminal (300),
**characterized in that**
the unique authentication information comprises a telephone number, and
the communication terminal (300) is configured to display the telephone number.

2. The anti-hacking system as claimed in claim 1, wherein the communication terminal (300) receives contents for the user authentication from the main server (200) and provides the received contents when a response is made, whereby the user performing the telephone authentication can clearly check whether authentication contents have been improperly changed by hacking.

## Patentansprüche

1. Anti-Hacking-System durch telefonische Authentifizierung, umfassend:
ein Zugriffsendgerät (100), das ausgelegt ist, um mit dem Internet verbunden zu sein und auf eine Seite zuzugreifen, die eine Benutzerauthentifizierung erfordert;
ein Kommunikationsendgerät (300), das einem Benutzer des Zugriffsendgeräts (100) gehört;
einen Hauptserver (200), der ausgelegt ist, um auf das Kommunikationsendgerät (300) zuzugreifen (S104), die Authentizität des Benutzers durch Ausführen (S107) einer Telefonauthentifizierung zu überprüfen und die Benutzerauthentifizierung zu verarbeiten (S108-S109), nachdem bestimmt wurde, dass der Benutzer vereinbarte Informationen über das Zugriffsendgerät (100) eingegeben hat,
wobei das Kommunikationsendgerät (300) ausgelegt ist zum Empfangen (S105) spezifischer Authentifizierungsinformationen des Benutzers vom Hauptserver (200), um die Identität eines Anrufers zu identifizieren und die spezifische Authentifizierungsinformation bereitzustellen, so dass die spezifische Authentifizierungsinformation vom Benutzer vor der Eingabe der vereinbarten Information in das Zugangsendgerät (100) überprüft werden kann,
wobei der Benutzer, der die telefonische Authentifizierung durchführt, die Effektivität der Authentifizierung durch das Kommunikationsendgerät (300) eindeutig überprüfen kann,
**dadurch gekennzeichnet, dass**
die spezifische Authentifizierungsinformation eine Telefonnummer umfasst, und das Kommunikationsendgerät (300) ausgelegt ist, um die Telefonnummer anzuzeigen.

2. Anti-Hacking-System nach Anspruch 1, wobei das Kommunikationsendgerät (300) Inhalte für die Benutzerauthentifizierung vom Hauptserver (200) empfängt und die empfangenen Inhalte bereitstellt, wenn eine Antwort erfolgt, wodurch der Benutzer, der die Telefonauthentifizierung durchführt, eindeutig überprüfen kann, ob Authentifizierungsinhalte unzulässigerweise durch Hacking geändert wurden.

## Revendications

1. Système anti-piratage par authentification téléphonique, comprenant:
un terminal d'accès (100) configuré pour être connecté à Internet pour accéder à un site nécessitant une authentification utilisateur;
un terminal de communication (300) appartenant à un utilisateur du terminal d'accès (100);
un serveur principal (200) configuré pour accéder (S104) le terminal de communication (300), vérifier l'authenticité de l'utilisateur en effectuant (S107) une authentification téléphonique, et
traiter (S108-S109) l'authentification utilisateur, après avoir déterminé que l'utilisateur a entré information convenue via le terminal d'accès (100),
dans lequel le terminal de communication (300) est configuré pour
recevoir (S105) information d'authentification unique de l'utilisateur, identifier la validité d'un appelant, du serveur principal (200) et
fournir l'information d'authentification unique afin que l'information d'authentification unique peut être contrôlée par l'utilisateur avant d'entrer l'information convenue dans le terminal d'accès,
dans lequel l'utilisateur effectuant l'authentification téléphonique peut vérifier clairement l'efficacité de l'authentification par l'intermédiaire du terminal de communication (300),
**caractérisé en ce que**
l'information d'authentification unique comprend un numéro de téléphone, et
le terminal de communication (300) est configuré pour afficher le numéro de téléphone.

2. Système anti-piratage selon la revendication 1, dans lequel le terminal de communication (300) reçoit des contenus pour l'authentification d'utilisateur du serveur principal (200) et fournit les contenus reçus lorsqu'une réponse est donnée, l'utilisateur effectuant l'authentification téléphonique pouvant ainsi vérifier clairement si les contenus d'authentification ont été modifiés par piratage.
